Europäisches Patentamt

European Patent Office

Office européen des brevets

(11) Publication number: **0 281 364**
**A2**

# (12) EUROPEAN PATENT APPLICATION

(21) Application number: **88301784.0**

(22) Date of filing: **01.03.88**

(51) Int. Cl.⁴: **B 01 J 37/02**

(30) Priority: **04.03.87 US 21409**

(43) Date of publication of application:
**07.09.88 Bulletin 88/36**

(84) Designated Contracting States:
**AT BE CH DE ES FR GB GR IT LI LU NL SE**

(71) Applicant: **ALCAN INTERNATIONAL LIMITED**
**1188 Sherbrooke Street West**
**Montreal Quebec H3A 3G2 (CA)**

(72) Inventor: **Coady, Laurie Anne**
**2-332 Princess Street**
**Kingston Ontario (CA)**

**Smits, Paul**
**R.R. 1, Kingston**
**Ontario (CA)**

(74) Representative: **Pennant, Pyers et al**
**Stevens, Hewlett & Perkins 5 Quality Court Chancery Lane**
**London, WC2A 1HZ (GB)**

(54) Catalyst including anodized aluminum substrate and method of manufacture.

(57) The invention concerns a heterogeneous catalyst produced by etching an aluminum substrate (10) to form macropores (11) therein, anodizing the etching substrate to establish a microporous aluminum oxide film (12) on the walls of the macropores, and depositing at least one catalytically active metal (16) in the micropores of the oxide film, e.g. by an electro-deposition technique. The calayst has a high surface area of active components and a high activity per unit weight of catalyst. The catalyst can be used for a variety of purposes, depending on the active metal deposited, e.g. petroleum refining, chemical processing and emission control.

FIG. 1

**Description**

Catalyst including anodized aluminum substrate and method of manufacture

This invention relates to catalysts of the type comprising a catalytically active metal deposited on an anodized aluminum substrate, and to methods of making such catalysts.

Heterogeneous catalysts, as currently employed (for example) in petroleum refining, chemical processes, and emission control, are commonly in the form of pellets constituted of mixed oxides, or dispersions of one or more catalytically active metals on oxide supports such as silica or alumina. Preparation of the pellets typically involves fusion of powders at high temperatures, while the dispersion-support catalysts are produced by a multi-step (impregnation, calcination, reduction) energy-consuming process. These catalysts are particularly active owing to their high surface areas which may be in excess of 150 m²/g.

As described, for example, in U.S. patent No. 4,472,533, anodized aluminum may also be used to support catalytically active metals. The anodic film is electrochemically grown in sulfuric, phosphoric or other acid yielding an oxide with uniform cylindrical pores. The diameter and length of the pores may be varied, depending on the anodizing conditions (voltage, temperature, acid concentration) selected. For use in particular reactions, one or more noble and/or transition metals are electrodeposited (typically from aqueous solution) into the pores, the choice of metal or metals being dependent on the end use of the catalyst.

In such catalysts as heretofore prepared (typically on a commercial purity aluminum foil substrate), a comparatively low surface area of active components is achieved. Increase in surface area would be advantageous, making the catalyst foil product much more attractive for commercial applications, in that the activity per gram of catalyst would be enhanced.

The present invention, in a first aspect, contemplates the provision of a new and improved method of making a catalyst product comprising an aluminum substrate having a microporous surface and at least one catalytically active metal deposited thereon. This method broadly includes the steps of electrolytically etching an aluminum substrate to form macropores therein; anodizing the etched substrate to establish a micorporous anodic aluminum oxide film on the walls of the macropores; and depositing the catalytically active metal or metals in the micropores of the anodic film within the macropores. It will be understood that the term "aluminum," as used herein, embraces aluminum metal of commercial (or higher) purity and aluminum-based alloys.

In a second aspect, the invention contemplates the provision of a catalyst product comprising an aluminum substrate having macropores formed therein by electrolytic etching; a microporous aluminum film formed on the walls of the macropores by anodizing the substrate after etching; and one or more catalytically active metals deposited in micropores of the film after anodizing.

Further, the invention contemplates the provision of an intermediate product (suitable for deposition of catalytically active metal) by the successive steps of electrolytically etching an aluminum substrate to form macropores and anodizing the etched substrate to form a microporous anodic aluminum oxide film on the walls of the macropores.

Preferably, the substrate is fabricated in such manner as to produce a highly cubic texture. Preferably, also, the substrate is aluminum foil.

A preferred range for the diameter or cross-sectional dimension of the macropores is 0.5-1.5 microns. The length of the macropores is restricted only by the linear dimensions of the aluminum foil substrate.

The invention achieves a great increase in surface area of alumina and deposited metal, as compared with prior catalysts constituted of catalytically active metal(s) deposited on anodized aluminum substrates, because the initial formation of macropores provides a vast extension of surface area for subsequent formation of the anodic film, in the micropores of which the catalytically active metal(s) is or are ultimately deposited. Thereby, for a substrate of any given unetched surface area per unit weight, the activity per unit weight is very largely enhanced.

Further features and advantages of the invention will be apparent from the detailed description hereinbelow set forth, together with the accompanying drawings, in which:

Fig. 1 is a schematic, microscopic cross-sectional view of a portion of a catalyst embodying the present invention in a particular form;

Fig. 2 is an SEM micrograph (500 × magnification) showing a cross-section of aluminum foil having macropores deeply etched therein;

Fig. 3 is an SEM micrograph (3500 × magnification) showing in planar section the foil of Fig. 2 having the deeply etched macropores;

Fig. 4 is a TEM micrograph (3,600 × magnification) showing in cross-section an embodiment of the catalyst of the invention prepared from the etched foil of Figs. 2-3; and

Fig. 5 is a TEM micrograph (36,000 × magnification) showing, in further enlarged cross-section, the foil catalyst of Fig. 4.

The invention will be described, for purposes of illustration, as embodied in procedures for producing a heterogeneous catalyst on an aluminum foil substrate, and in the products of such procedures. Foil substrate catalysts are particularly advantageous for many applications, for reasons of convenience and also because of their high surface-to-weight ratio (as compared to substrates of heavier gauge); in a broad sense, however, the invention embraces the use of other types of aluminum substrates as well.

Currently preferred embodiments of the invention employ, as the substrate, heavy-gauge (50-100 micron) aluminum foil fabricated in such a manner as to produce a highly cubic texture (100 crystal orientation). By "highly cubic" is meant an extent of cubic texture greater than 50%.

In the method of the invention, in these embodiments, the foil is first electrolytically etched to form deep tunnels or macropores, the directionality of which corresponds to the texture. Such electrolytic "tunnel" etching of aluminum foil has heretofore been employed in the capacitor manufacturing industry (where the increase in surface area caused by etching results in increased capacitance of the foil), as described, for example, in U.S. patent No. 4,518,471, the disclosure of which is incorporated herein by this reference. The tunnel etching process set forth in the last-mentioned patent is one illustrative through non-limiting example of procedure suitable for use in performing the tunnel etching of the substrate in the method of the present invention; and the reasons given in that patent for preferring a substrate having a highly cubic texture are generally applicable to the present invention. As will be apparent to persons of ordinary skill in the art, the dimensions and spacing of the macropores may be tailored according to the fabrication and etching techniques employed.

Subsequent to tunnel etching, in the present method, the foil (or other aluminum substrate) is porous anodized in a suitable (e.g. dilute phosphoric) acid to form a microporous aluminum oxide support layer, thereby increasing the total available surface area further. By "porous anodizing" is meant anodizing under conditions producing a microporous anodic layer, as exemplified by the anodizing procedures described in the aforementioned U.S. patent No. 4,472,533, although again the present invention is not limited to use of the latter procedures. Such porous anodizing is to be distinguished from anodizing (as heretofore sometimes employed in the preparation of tunnel-etched foil for capacitor use) under conditions for producing a non-porous barrier-type anodic oxide film lining the tunnels or macropores.

The intermediate product of the steps thus far described is an aluminum foil or other aluminum substrate having deep-etched macropores (e.g. about 0.5 to about 1.5 microns in average diameter and about 40 microns in average length) lined with a microporous anodic aluminum oxide film, the micropores of which typically or illustratively have an average diameter of about 200 Angstrom units and an average length of about 2500 Angstrom units. The microporous film lines the walls of the macropores essentially entirely throughout the length of the macropores.

A catalytically active metal, or a mixture of such metals, is then electrodeposited on the foil or other substrate, using alternating current. Again by way of non-limiting example, the metal or metals used and the techniques employed to electrodeposit them may be as set forth in the aforementioned U.S. patent No. 4,472,533.

Alternatively, the catalytically active metal may be deposited into the microporous anodic film by other methods, for example impregnation with a solution of a metal salt, followed by boiling off the solvent (water or non-aqueous).

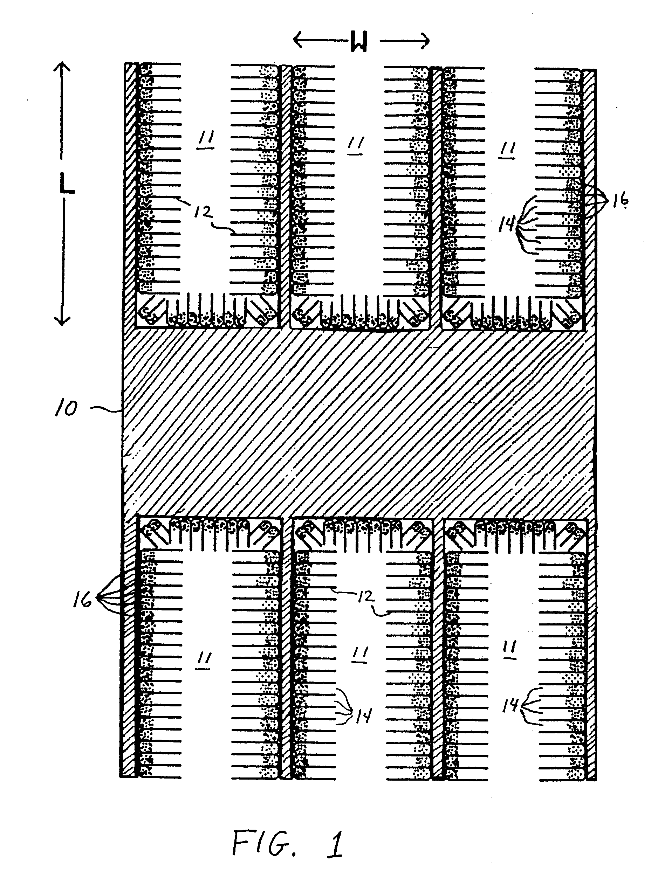

The resulting structure is shown schematically in Fig. 1. As there illustrated, the aluminum foil substrate 10 has macropores 11 formed by electrolytic tunnel etching in both surfaces, the length and width dimensions of these macropores being respectively indicated by arrows L and W. All walls of each macropore are lined with an anodic aluminum oxide film 12 having a large multiplicity of micropores 14. These micropores constitute sites in which the catalytically active metal(s) is or are deposited; each individual deposit 16 is separated from its neighbors by portions of the oxide film constituting the walls of the micropores.

The following table lists some calculated surface areas for unetched/anodized foil, and etched/anodized foil with assumed macropore dimensions and pore population densitites as indicated. The etched/anodized foil represents a substrate prepared in accordance with the present invention, i.e. for subsequent deposition of catalytically active metal. The figures indicate a huge increase in surface are due to etching prior to anodizing.

3

## TABLE

(all values of length, diameter and density are assumed values)

Macropore length: $40 \times 10^{-6}$ m.

Micropore diameter: 200 Angstrom units

Micropore length: 2500 Angstrom units

| Foil Condition | Macropore Width $(x \ 10^{-6}m)$ | Macropore Density $(\# x10^{11}/m^2)$ | Total Surface Area $(m^2/m^2 \ foil)$ |
|---|---|---|---|
| unetched/ anodized | none | none | 6 |
| etched/ anodized | 1.5 | 2.5 | 380 |
| | 1.0 | 6.4 | 650 |
| | 0.5 | 22.5 | 1135 |

The advantages of a catalyst prepared in accordance with the invention include the large number (approximately $4 \times 10^{16}$) of catalytically active metal colonies provided per square meter of substrate; the separation of the active metal colonies by oxide, which should reduce the tendency to sinter at elevated temperature and so increase the lifetime of the catalyst; and the macropore/micropore configuration which ensures that the active sites are readily accessible to the reactants.

As an alternative to the embodiments described above, an aluminum substrate (e.g., foil) which does not have a pronounced cubic texture may be used. Again, such a catalyst would have many, well separated, active sites. However, after deep-etching, it is expected that a tortuous network of macropores will result. Although such a structure may not be ideal from a catalytic standpoint, it may be a more cost-effective one to produce.

The catalyst products of the present invention have utility as heterogeneous catalysts, for example, (but again without limitation) for the purposes described in the aforementioned U.S. patent No. 4,472,533.

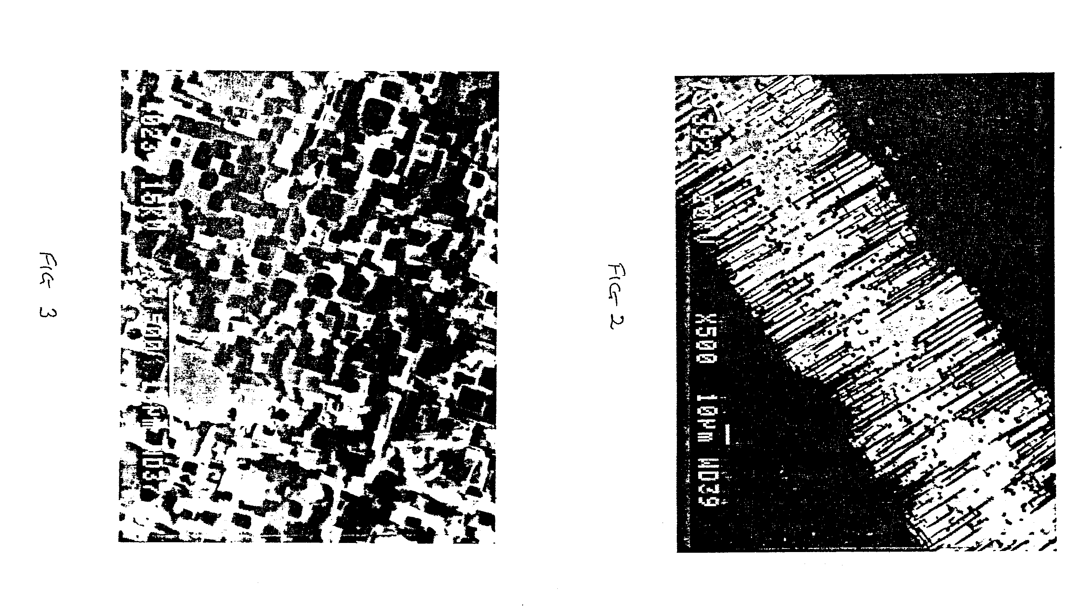

By way of further and more specific illustration of the invention, reference may be made to the following specific example, in conjunction with the micrographs of Figs. 2-5.

EXAMPLE

Aluminum foil of highly cubic texture in both cross and planar section was electrolytically etched in 3-5% HCl at a temperature of 70-100°C, with a current density of 5-20 $A/dm^2$, for a time of 5-7 minutes. Nonelectrolytic (i.e. chemical) etching could not be used because the macropores would not then follow the grain boundaries. After the foil was etched to the condition shown in Figs. 2 and 3 (note the very cubic nature of the etch tunnels owing to the texture of the foil), it was anodized in 0.8M $H_3PO_4$ at 10 V for 900 sec. Finally, Ni was electrodeposited from a standard solution (25 g/l $NiSO_4.7H_2O$; 20 g/l $MgSO_4.7H_2O$; 25 g/l $H_3BO_3$; 15 g/l $(NH_4)_2SO_4$; 1 g/l tartaric acid; pH 5.5-6.0) using alternating current for 90 sec. at 10 V rms.

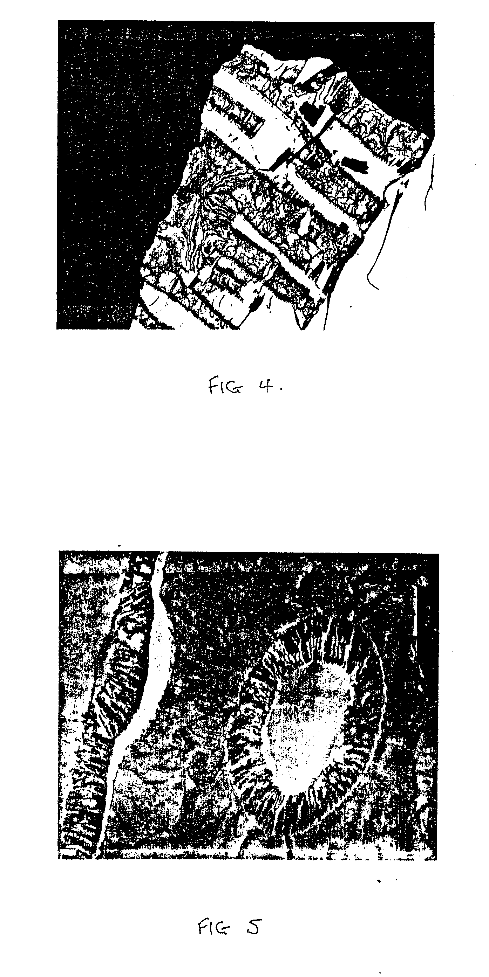

Thin sections of this material were prepared for TEM viewing by ultramicrotomy. Figure 4 shows such a section where the light areas are the deep-etched pores with diameters of approximately 1 micron. Also apparent from this micrograph is that the anodic film has formed right down to the base of the macropores. Figure 5 is an enlargement of the anodic film which shows the porous oxide and the colonies of electrodeposited Ni within the pores.

**Claims**

1. A method of making a catalyst comprising an aluminum substrate having a microporous anodized surface and at least one catalytically active metal deposited thereon, characterized by the steps of
(a) electrolytically etching an aluminum substrate to form macropores therein;

(b) anodizing the etched substrate to establish a microporous anodic aluminum oxide film on the walls of said macropores; and

(c) depositing at least one catalytically active metal in micropores of said film within said macropores.

2. A method according to claim 1, characterized in that said substrate is aluminum foil.

3. A method according to claim 2, characterized in that said substrate has a highly cubic texture.

4. A method according to claim 1, characterized in that the macropores have a cross-sectional dimension of 0.5-1.5 micron.

5. A method according to any preceding claim characterized in that said at least one catalytically active metal is electrodeposited in said micropores.

6. A method according to any one of claims 1 to 4 characterized in that said at least one catalytically active metal is deposited in said micropores by impregnation of a solution of metal salt in a solvent followed by boiling off said solvent.

7. A catalyst characterized by:

(a) an aluminum substrate (10) having macropores (11) formed therein by electrolytic etching;

(b) a microporous aluminum oxide film (12) formed on walls of said macropores (11) by anodizing said substrate (10) after etching; and

(c) deposits (16) of catalytically active metal in micropores (14) of said film.

8. A catalyst as defined in claim 7, characterized in that said substrate (10) has a highly cubic texture.

9. A catalyst as defined in claim 8, characterized in that said substrate (10) is aluminum foil.

10. A method of preparing an aluminum substrate for deposition of one or more catalytically active metals thereon to produce a catalyst, characterized by the steps of:

(a) electrolytically etching the substrate to form macropores therein, and

(b) anodizing the etching substrate to form a microporous anodic aluminum oxide film on the walls of the macropores.

11. An intermediate product suitable for deposition of one or more catalytically active metals thereon to produce a catalyst, characterized by:

an aluminum substrate (10) having macropores (11) formed therein by electrolytic etching; and

a microporous aluminum oxide film (12) formed on walls of said macropores (11) by anodizing said substrate (10) after etching.

FIG. 1

0281364

FIG 2

FIG 3

0281364

FIG 4.

FIG 5